# EUROPEAN PATENT APPLICATION

(11) **EP 4 468 491 A1**
(43) Date of publication of application: **27.11.2024**
(21) Application number: 22922038.9
(22) Date of filing: 01.11.2022
(51) Int. Cl.: H01M 50/317, H01M 10/04, H01M 50/325, H01M 50/588, H01M 50/59

(54) **PRESSURE REGULATING VALVE**

(30) Priority: 21.01.2022 JP 2022007823
(71) Applicant: NOK Corporation, Minato-ku Tokyo 105-8585 (JP)
(72) Inventor: NAGASAWA, Motohiro, Kitaibaraki-shi Ibaraki 319-1535 (JP); SAKUMA, Katsuyoshi, Kitaibaraki-shi Ibaraki 319-1535 (JP)
(74) Representative: TBK
(86) International application number: PCT/JP2022/040926
(87) International publication number: WO 2023/139887

(57) **Abstract**

The occurrence of short circuit between power storage modules caused by an electrolytic solution coming out of a pressure regulating valve is to be reduced. A pressure regulating valve (1) is attached to each of power storage modules (2), is a pressure regulating valve allowing internal spaces (V) of the power storage modules (2) to be open, respectively, and has a short-circuit preventing structure for preventing an electrolytic solution coming outside of the power storage modules (2) from causing short circuit with another power storage module (2) or short circuit between other power storage modules (2).

## Description

### Technical Field

The present invention relates to a pressure regulating valve, in particular, to a pressure regulating valve to be used for a power storage module.

### Background Art

A known bipolar cell (a power storage module) includes bipolar electrode including a positive electrode formed on one surface of a current collector and a negative electrode formed on the opposite surface thereof. In such a power storage module, bipolar electrodes are stacked, an internal space defined by a seal member is formed between current collectors of opposed ones of the bipolar electrodes to each other, and an electrolytic solution is sealed in the internal space. Moreover, a separator intervenes between the bipolar electrodes opposed to each other and the separator is impregnated with the electrolytic solution to form an electrolyte layer.

There are cases where such a power storage module suffers, in use, the generation of gas such as hydrogen caused by, for example, over discharge, which leads to a rise in the pressure of the internal space of the power storage module. In order to avoid such a rise in the pressure of the internal space, some conventional power storage modules include a pressure regulating valve that causes the internal space to be open in response to the pressure of the internal space rising to reach a predetermined pressure (see, for example, Patent Literature 1).

### Citation List

### Patent Literature

Patent Literature 1: International Puclication No. 2019/064843

### Summary of Invention

### Technical Problem

As for a conventional power storage module including a pressure regulating valve as above, while a rise in the pressure of an internal space can be prevented, an electrolytic solution comes outside along with gas generated in the internal space when the pressure regulating valve is opened in some cases. In a power storage device in which power storage modules are stacked in an up-and-down direction (a vertical direction), an electrolytic solution coming out of a pressure regulating valve of upper one of the power storage modules falls down and the electrolytic solution fallen down adheres to a pressure regulating valve of the power storage module located below in some cases. There is a possibility that such an electrolytic solution coming out of the power storage module causes short circuit between adjacent ones of the power storage modules. Accordingly, the conventional power storage device including the power storage modules stacked in the up-and-down direction has been demanded to have a configuration enabling prevention of the occurrence of short circuit between the power storage modules caused by the electrolytic solution coming out of the pressure regulating valve.

An object of the present invention is to provide a pressure regulating valve enabling a reduction in the occurrence of short circuit between power storage modules caused by an electrolytic solution coming out of a pressure regulating valve.

### Solution to Problem

In order to solve the above-described object, a pressure regulating valve according to the present invention, in a power storage device which includes a plurality of power storage modules and in which the power storage modules are stacked, allows internal spaces of each of the power storage modules to be open. In each of the power storage modules, a plurality of bipolar electrodes are stacked between an electrode with a positive polarity and an electrode with a negative polarity. Each of the bipolar electrodes includes a current collector, a positive electrode provided on one surface of the current collector, and a negative electrode provided on an opposite surface of the current collector. Each of the internal spaces defined by seal members is formed between each pair of the electrodes opposed to one another, an electrolytic solution is sealed in each of the internal spaces. A separator intervenes between each pair of the electrodes opposed to one another. The pressure regulating valve includes a short-circuit preventing structure for preventing short circuit between the power storage modules caused by the electrolytic solution coming outside of the power storage modules.

In the pressure regulating valve according to an aspect of the present invention, the short-circuit preventing structure is configured to prevent the electrolytic solution coming outside of one of the power storage modules from causing the short circuit of another one of the power storage modules located below the power storage module from which the electrolytic solution comes out.

The pressure regulating valve according to an aspect of the present invention includes a housing to be attached to the power storage module, the housing including an opening portion and communication paths through which the respective internal spaces are caused to be in communication with the opening portion; a valve body blocking each of the communication paths while allowing the communication path to be open; and a lid to be attached to the opening portion of the housing, in which the housing includes an upper wall portion and a lower wall portion that are portions opposed to each other in a stacking direction of the power storage modules to form the opening portion, a drain outlet is formed in the lower wall portion, the drain outlet being a portion penetrating the lower wall portion, an upper surface of the upper wall portion is provided with a stepped portion, the upper surface being a surface facing an upper side, the stepped portion projecting on the upper side to form a step, and the stepped portion is located at a position not opposed in the up-and-down direction to the drain outlet.

In the pressure regulating valve according to an aspect of the present invention, the drain outlet is provided in at least one of end portions in an extending direction of the lower wall portion.

In the pressure regulating valve according to an aspect of the present invention, the lower wall portion has an inner surface, the inner surface being a surface facing the upper side, and a flow path is formed in the inner surface, the flow path forming a flow of liquid directed to the drain outlet.

In the pressure regulating valve according to an aspect of the present invention, the lid projects on the upper side with respect to the upper wall portion. Advantageous Effect(s) of Invention

The pressure regulating valve according to the present invention makes it possible to reduce the occurrence of short circuit between power storage modules caused by an electrolytic solution coming out of a pressure regulating valve.

### Brief Description of Drawing(s)

[Fig. 1] Fig. 1 is a cross-sectional view illustrating a schematic configuration of a power storage module to which a pressure regulating valve according to an embodiment of the present invention is to be attached.
[Fig. 2] Fig. 2 is a perspective view of the power storage module attached with the pressure regulating valve according to the embodiment of the present invention.
[Fig. 3] Fig. 3 is a schematic perspective view of a power storage device, illustrating an example of a power storage device produced with use of the power storage module.
[Fig. 4] Fig. 4 is an exploded perspective view of the pressure regulating valve illustrated in Fig. 2.
[Fig. 5] Fig. 5 is an exploded perspective view of the pressure regulating valve illustrated in Fig. 2.
[Fig. 6] Fig. 6 is a plan view of a housing of the pressure regulating valve illustrated in Fig. 2.
[Fig. 7] Fig. 7 is a bottom view of the housing of the pressure regulating valve illustrated in Fig. 2.
[Fig. 8] Fig. 8 is a back view of a lid of the pressure regulating valve illustrated in Fig. 2.
[Fig. 9] Fig. 9 is a top view of the lid of the pressure regulating valve illustrated in Fig. 2.
[Fig. 10] Fig. 10 is a partial enlarged view illustrating, in close-up, a neighborhood of a drain outlet of the housing of the pressure regulating valve illustrated in Fig. 2.
[Fig. 11] Fig. 11 is a partial enlarged view illustrating, in close-up, a neighborhood of a stepped portion of the housing of the pressure regulating valve illustrated in Fig. 2.
[Fig. 12] Fig. 12 is a side view of the pressure regulating valve illustrated in Fig. 2.
[Fig. 13] Fig. 13 is a view of the pressure regulating valves arranged one above the other in the power storage device as viewed from the front side.
[Fig. 14] Fig. 14 is a view of lower one of the pressure regulating valves in Fig. 13 as viewed from the lateral side.

### Description of Embodiment(s)

Description will be made below on an embodiment of the present invention with reference to the drawings.

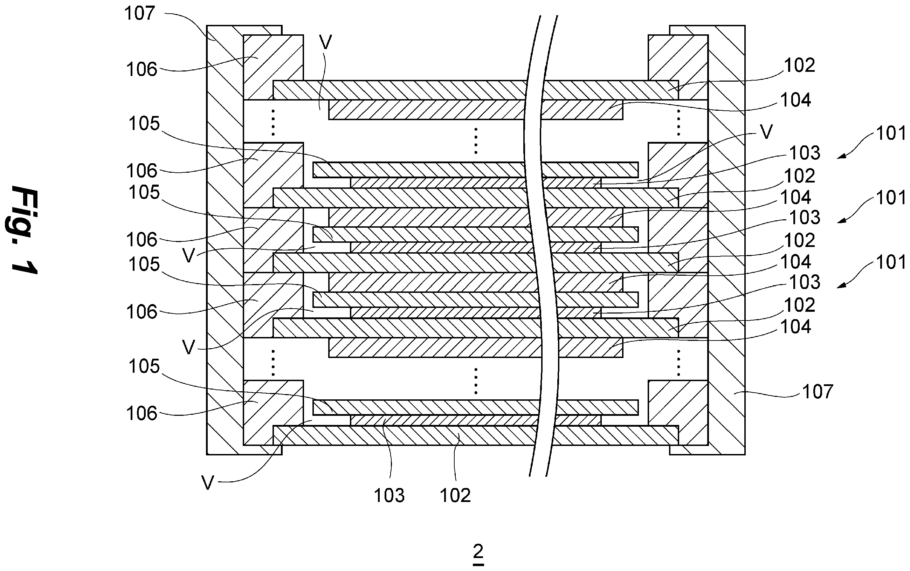

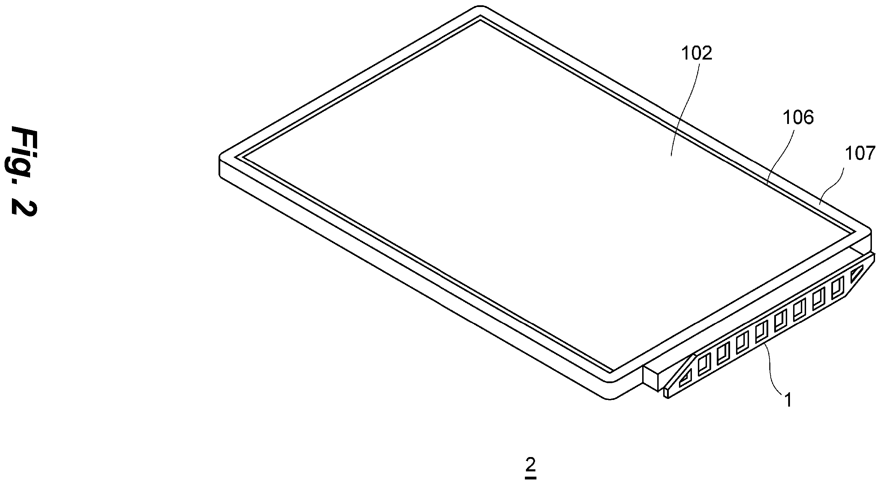

Fig. 1 is a cross-sectional view illustrating a schematic configuration of a power storage module 2 to which a pressure regulating valve 1 according to the embodiment of the present invention is to be attached and Fig. 2 is a perspective view of the power storage module 2 attached with the pressure regulating valve 1. The power storage module 2 includes a plurality of bipolar electrodes 101 and the plurality of bipolar electrodes 101 are stacked such that adjacent ones of the bipolar electrodes 101 are opposed to each other in the power storage module 2. The bipolar electrodes 101 each include a current collector 102, a positive electrode 103 provided on one surface of the current collector 102, and a negative electrode 104 provided on the opposite surface of the current collector 102. A separator 105 is disposed between a pair of bipolar electrodes 101 adjacent and opposed to each other and the respective separators 105 intervene between the pairs of bipolar electrodes 101 opposed to each other. The positive electrode 103 of one of the bipolar electrodes 101 is opposed to the negative electrode 104 of another one of the bipolar electrodes 101 opposed to the one bipolar electrode 101 with the separator 105 in between and the negative electrode 104 of one of the bipolar electrodes 101 is opposed to the positive electrode 103 of another one of the bipolar electrodes 101 opposed to the one bipolar electrode 101 with the separator 105 in between. The current collector 102 as a negative-electrode-side terminal electrode, which is provided with the negative electrode 104 on an inner surface thereof, is disposed at one end of the stacked bipolar electrodes 101 where the positive electrode 103 faces the outer side, whereas the current collector 102 as a positive-electrode-side terminal electrode, which is provided with the positive electrode 103 on an inner surface thereof, is disposed at the opposite end of the stacked bipolar electrodes 101 where the negative electrode 104 faces the outer side. The negative electrode 104 of the current collector 102 as the negative-electrode-side terminal electrode is opposed to the positive electrode 103 of the bipolar electrode 101 at the one end with the separator 105 in between, whereas the positive electrode 103 of the current collector 102 as the positive-electrode-side terminal electrode is opposed to the negative electrode 104 of the bipolar electrode 101 at the opposite end with the separator 105 in between.

Internal spaces V defined by seal members 106 are formed between the respective pairs of bipolar electrodes 101 opposed to each other and an electrolytic solution (not illustrated) is sealed in each of the internal spaces V. The internal space V defined by the seal member 106 is formed between the current collector 102 as the negative-electrode-side terminal electrode and the bipolar electrode 101 opposed thereto and the electrolytic solution (not illustrated) is sealed in the internal space V. Moreover, the internal space V defined by the seal member 106 is formed between the current collector 102 as the positive-electrode-side terminal electrode and the bipolar electrode 101 opposed thereto and the electrolytic solution (not illustrated) is sealed in the internal space V. The internal spaces V are spaces partitioned with air tightness by the current collectors 102 and the seal members 106. The electrolytic solution is, for example, an alkaline solution such as potassium hydroxide aqueous solution.

The electrodes stacked with the respective internal spaces V formed between the electrodes opposed to one another (the bipolar electrodes 101, the current collector 102 as the positive-electrode-side terminal electrode, and the current collector 102 as the negative-electrode-side terminal electrode) as described above are supported by a frame 107 provided to cover side surfaces of the seal members 106.

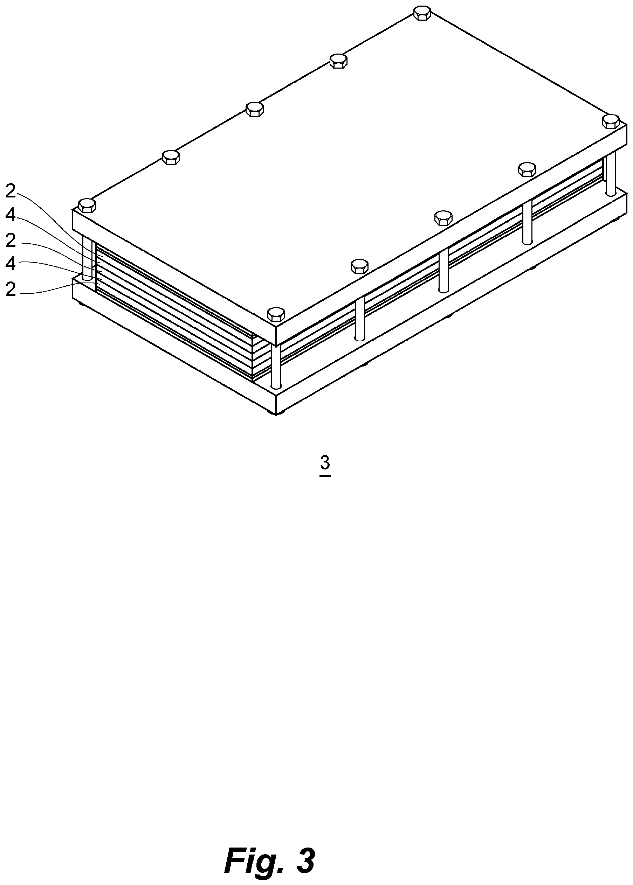

Fig. 3 is a schematic perspective view of a power storage device 3, illustrating an example of a power storage device produced with use of the power storage module 2. The power storage device 3 is formed by stacking a plurality of power storage modules 2 such that the power storage modules 2 are opposed with a conductive plate 4 in between. The plurality of power storage modules 2 are stacked in the power storage device 3 such that the current collector 102 as the negative-electrode-side terminal electrode of one of a pair of power storage modules 2 opposed to each other is opposed to the current collector 102 as the positive-electrode-side terminal electrode of the other power storage module 2 of the pair with the conductive plate 4 in between. The power storage device 3 is to be used in, for example, a vehicle or the like, specifically, for example, an electric vehicle or a hybrid vehicle. It should be noted that an object where the power storage device 3 is to be used is not limited to a vehicle.

The pressure regulating valve 1 is attached to each of the power storage modules 2, is a pressure regulating valve allowing the internal spaces V of the power storage module 2 to be open, respectively, and has a short-circuit preventing structure for preventing short circuit with another power storage module 2 or short circuit between other power storage modules 2 caused by the electrolytic solution coming outside from the power storage module 2. A specific description will be made below on the pressure regulating valve 1.

As illustrated in Fig. 2, the pressure regulating valve 1 is attached to the power storage module 2. The frame 107 of the power storage module 2 is formed with openings (not illustrated) through which the respective internal spaces V are caused to open outside of the frame 107 of the power storage module 2 and the pressure regulating valve 1 is configured to close each of the openings while allowing it to be open.

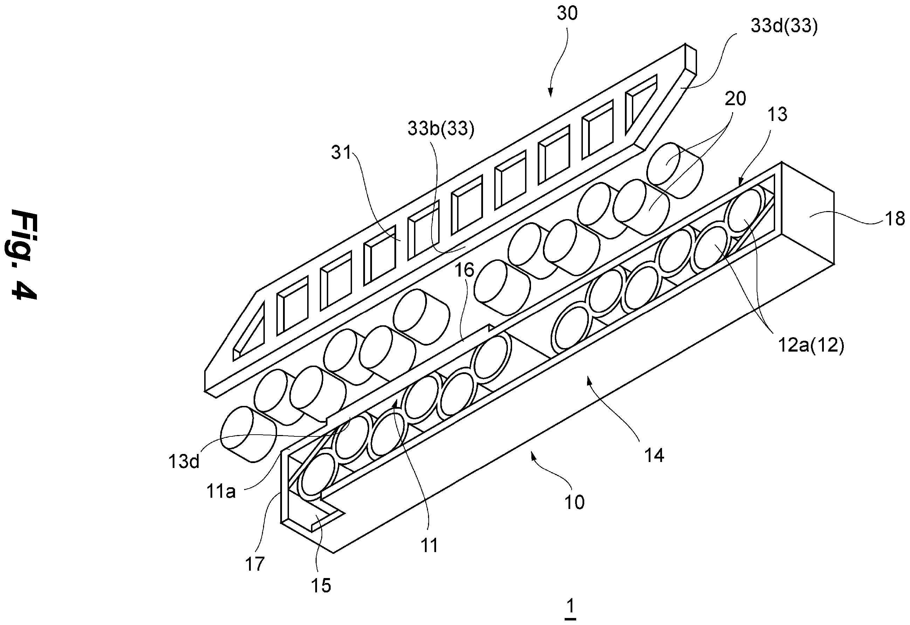

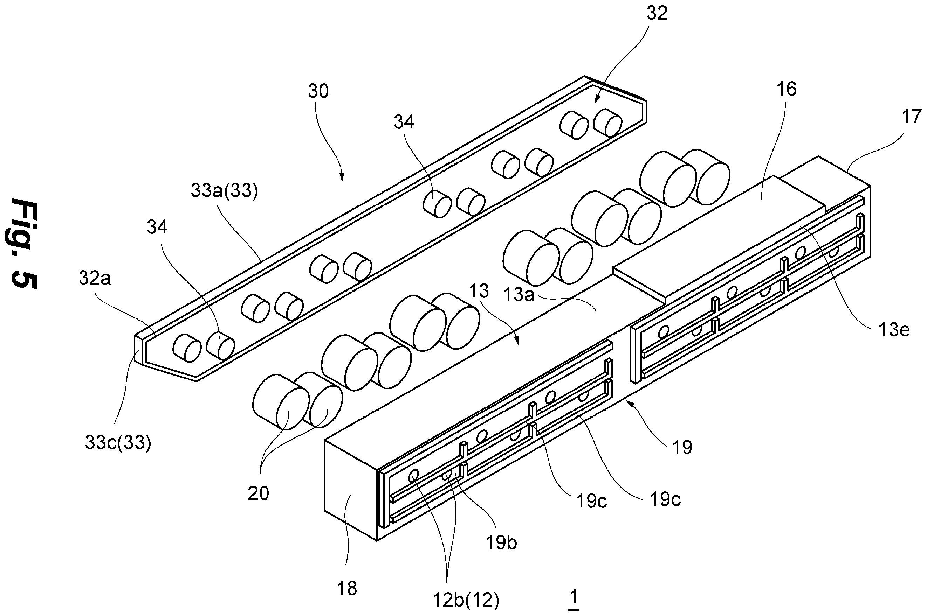

Figs. 4 and 5 are exploded perspective views of the pressure regulating valve 1. Fig. 4 and Fig. 5 illustrate the pressure regulating valve 1 as viewed from directions different from each other. As illustrated in Figs. 4 and 5, the pressure regulating valve 1 specifically includes a housing 10 to be attached to the power storage module 2, a valve body 20, and a lid 30 to be attached to the housing 10. The housing 10 has an opening portion 11 and a communication path 12 through which corresponding one of the internal spaces V of the power storage module 2 is in communication with the opening portion 11. The valve body 20 is configured to block the corresponding communication path 12 of the housing 10 while allowing the communication path 12 to be open. The lid 30 is configured to be attached to the opening portion 11 of the housing 10. The opening portion 11 is formed in a front portion of the housing 10 and forms a space open at a front end (an opening 11a). It should be noted that a stacking direction of the power storage modules 2 in the power storage device 3 is defined as an up-and-down direction for the convenience of explanation.

The housing 10, for example, as illustrated in Figs. 4 to 7, includes an upper wall portion 13 and a lower wall portion 14, which are portions opposed to each other in the up-and-down direction to form the opening portion 11, the lower wall portion 14 is formed with a drain outlet 15, which is a portion penetrating the lower wall portion 14,. An upper surface 13a of the upper wall portion 13, which is a surface facing the upper side, is provided with a stepped portion 16 projecting on the upper side to form a step and the stepped portion 16 is located at a position not opposed in the up-and-down direction to the through hole 15.

The opening portion 11 of the housing 10 is in a form of a recessed portion and the housing 10, which has a box-shaped outer shape as illustrated in, for example, Figs. 4 to 7, has side wall portions 17, 18. The upper wall portion 13, the lower wall portion 14, and the side wall portions 17, 18 are portions forming the outer shape of the housing 10. The side wall portion 17 and the side wall portion 18 are opposed back-to-back or face-to-face to each other and the side wall portions 17, 18 extend between the upper wall portion 13 and the lower wall portion 14. The side wall portion 17 is connected with, for example, an end (an end 13b) of the upper wall portion 13 and an end (an end 14b) of the lower wall portion 14 and the side wall portion 18 is connected with, for example, an end (an end 13c) of the upper wall portion 13 and an end (an end 14c) of the lower wall portion 14. The end 13b and the end 13c of the upper wall portion 13 are opposed back-to-back to each other in an extending direction of the upper wall portion 13 and the end 14b and the end 14c of the lower wall portion 14 are opposed back-to-back to each other in an extending direction of the lower wall portion 14.

The upper wall portion 13 and the lower wall portion 14 extend along, for example, a plane and have a shape of a quadrangular or substantially quadrangular plate. The upper wall portion 13 and the lower wall portion 14 extend along, for example, a direction for the bipolar electrodes 101 to stretch in the power storage module 2. Moreover, the side wall portions 17, 18 extend along, for example, a plane and have a shape of a quadrangular or substantially quadrangular plate. The upper wall portion 13, the lower wall portion 14, and the side wall portions 17, 18 form the opening portion 11 on one side (a front side) in a front-and-rear direction, which is a direction orthogonal to the up-and-down direction and the extending direction of the upper wall portion 13 or the lower wall portion 14. The interior of the upper wall portion 13, the lower wall portion 14, and the side wall portions 17, 18 on a rear side (the opposite side in the front-and-rear direction) with respect to the opening portion 11 is infilled, forming a solid portion 19. Incidentally, a plurality of communication paths 12 penetrate the solid portion 19.

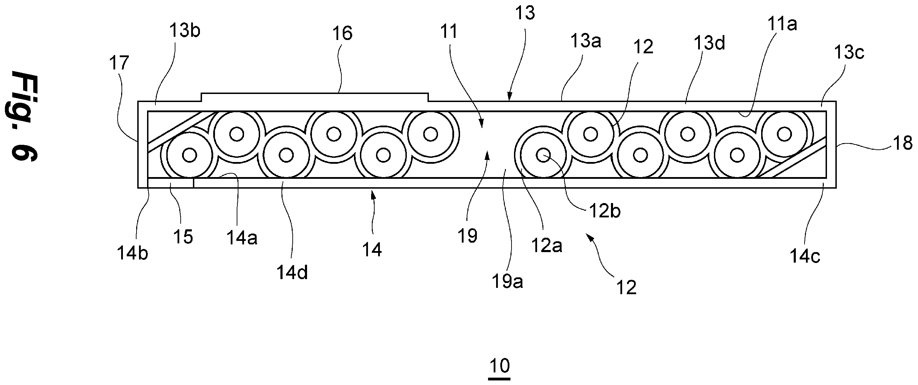

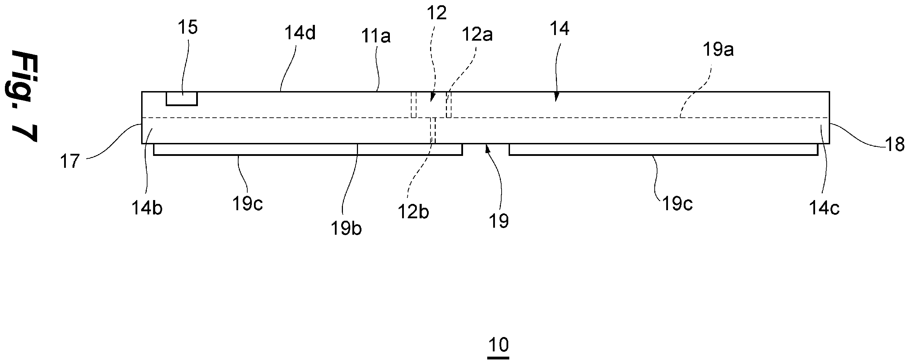

As illustrated in Figs. 4 to 6, the communication path 12 includes a valve body housing portion 12a, which is a portion forming a space to house the valve body 20, and a through hole 12b, which is a hole being in communication with the space formed by the valve body housing portion 12a and penetrating the solid portion 19. The valve body housing portion 12a is a cylindrical portion projecting forward from a front surface 19a, which is a surface of the solid portion 19 facing forward, as illustrated in, for example, Figs. 4 and 6. It should be noted that in Fig. 7, a part of the front surface 19a and the communication path 12 are drawn in broken lines. The valve body housing portion 12a is, for example, a cylindrical or substantially cylindrical portion extending in the front-and-rear direction. The through hole 12b, which is, for example, a through hole extending in the front-and-rear direction, extends between a portion of the front surface 19a of the solid portion 19 surrounded by the valve body housing portion 12a and a rear surface 19b, which is a surface of the solid portion 19 facing rearward. The housing 10 is provided with the communication paths 12, the number of which corresponds to the number of the internal spaces V of the power storage module 2, and a plurality of valve body housing portions 12a are ingeniously arranged in the opening portion 11 so as to save space. It should be noted that the number of the communication paths 12 provided in the pressure regulating valve 1 may be one.

As illustrated in Figs. 5 and 7, a projecting portion 19c is formed on the rear surface 19b of the solid portion 19 and the projecting portion 19c projects from the rear surface 19b to surround each of the through holes 12b so that the through holes 12b are able to be air-tightly in communication with the respective openings through which the internal spaces V of the power storage module 2 are caused to be open outside. The projecting portion 19c is bonded to the frame 107 of the power storage module 2 or a member attached to the frame 107 in attaching the pressure regulating valve 1 to the power storage module 2. The projecting portion 19c is attached to, for example, the frame 107 of the power storage module 2 or the member attached to the frame 107 by welding.

The housing 10 is formed into one piece from the same material and the valve body housing portion 12a, the upper wall portion 13, the lower wall portion 14, the side wall portions 17, 18, and the solid portion 19 are portions of the housing 10 made of the same material into one piece.

The valve body 20 is, for example, an elastic body made of an elastic material such as rubber. The valve body 20, which is shaped to be able to be housed in the valve body housing portion 12a and shaped to be able to come into contact with the front surface 19a in the valve body housing portion 12a to block the through hole 12b, has, for example, a columnar shape as illustrated in Figs. 4 and 5. Specifically, the valve body 20 is in, for example, a shape of a round column or substantially round column. The shape of the valve body 20, which may be a different shape without limitation to a round columnar shape or substantially round column shape, is a shape corresponding to the structure of the communication path 12 such as the shape of the valve body housing portion 12a.

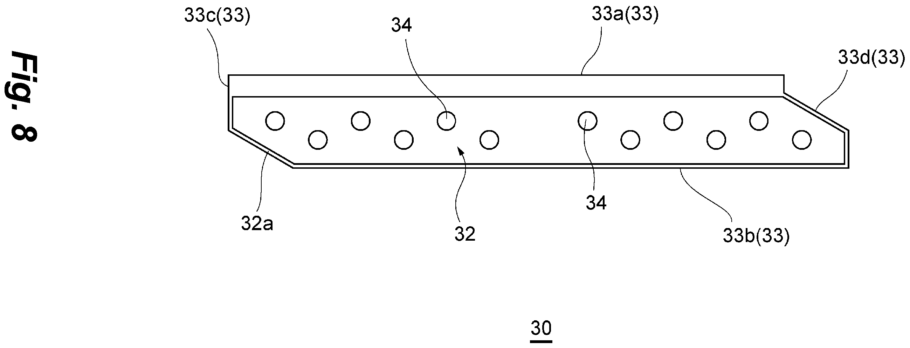

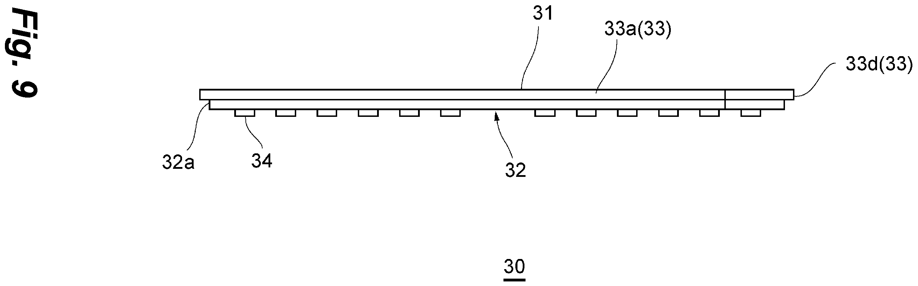

The lid 30 is configured to be attached to the opening portion 11 of the housing 10 as described above and is a member for closing the opening portion 11 of the housing 10 and sealing the internal spaces V of the power storage module 2. Specifically, the lid 30 is configured to be attached to the housing 10, pushing the valve body 20 in the valve body housing portion 12a rearward to close the through hole 12b and block the communication path 12. The lid 30 is a plate-shaped member extending along a plane as illustrated in, for example, Figs. 8 and 9 and forms a front surface 31, which is a surface facing the front side, a rear surface 32, which is a surface facing the rear side, and a peripheral surface 33, which is a surface extending between a perimeter of the front surface 31 and a perimeter of the rear surface 32 and fully along the perimeter of the front surface 31 and the perimeter of the rear surface 32.

The lid 30 is in a shape corresponding to the shape of the opening 11a of the opening portion 11 of the housing 10 and, for example, the front surface 31 and the rear surface 32 are in or substantially in a rectangular shape. In the illustrated example, the peripheral surface 33 includes an upper surface portion 33a, which is a portion facing the upper side, a lower surface portion 33b, which is a portion facing the lower side, and side surface portions 33c, 33d, which are portions facing an extending direction of the lid 30. The upper surface portion 33a and the lower surface portion 33b are surfaces along a plane and the side surface portions 33c, 33d are bent surfaces. The upper surface portion 33a and the lower surface portion 33b are, for example, in or substantially in parallel with a plane.

As illustrated in Figs. 5, 8, and 9, the rear surface 32 is provided with a stepped portion 32a forming an annularly extending step in conformity with the opening 11a of the opening portion 11 and the stepped portion 32a is engageable with the opening portion 11. The stepped portion 32a is, for example, able to be press-fitted in an end portion of the opening portion 11 on a side of the opening 11a. The lid 30 is attachable to the opening portion 11 by press-fitting the stepped portion 32a in the opening portion 11 and thus able to close the opening 11a. Moreover, the rear surface 32 is provided with protruding portions 34 projecting rearward, the number of which corresponds to the number of the valve body housing portions 12a. The protruding portions 34 are arranged such that the projecting portions 34 are each in a recessed portion of the corresponding valve body housing portion 12a when the lid 30 is attached to the housing 10.

In the pressure regulating valve 1, the protruding portions 34 of the lid 30 each push the valve body 20 rearward in the recessed portion of the corresponding valve body housing portion 12a to press the valve body 20 against the front surface 19a, including the through hole 12b, of the solid portion 19. This causes each of the valve bodies 20 to close the corresponding through hole 12b, thus blocking the corresponding communication path 12 to seal the corresponding internal space V of the power storage module 2. Meanwhile. the pressure of the internal space V of the power storage module 2 acts on the valve body 20 through the communication path 12, applying a force to press the valve body 20 forward. When the pressure of the internal space V of the power storage module 2 rises and the pressure of the internal space V exceeds a predetermined pressure, the force to press the valve body 20 forward becomes larger than a force to press the valve body 20 against the front surface 19a of the solid portion 19, causing the valve body 20 to be separated from the front surface 19a of the solid portion 19 to let the through hole 12b open and cause the communication path 12 to be in communication with the opening portion 11. This causes the internal space V of the power storage module 2 with the pressure exceeding the predetermined value to be open through the corresponding communication path 12 to release the pressure of the internal space V. When the pressure of the internal space V falls below the predetermined value by virtue of the release of the pressure, the valve body 20 is pressed against the front surface 19a of the solid portion 19, closing the through hole 12b to block the communication path 12 and seal the internal space V of the power storage module 2. The pressures of the internal spaces V of the power storage module 2 are thus prevented from becoming excessively high.

As described above, the pressure regulating valve 1 causes, in response to the pressure of the internal space V of the power storage module 2 exceeding the predetermined value, the corresponding communication path 12 to be open to release the pressure of the internal space V. When the pressure of the internal space V is released, the electrolytic solution in the internal space V comes out into the opening portion 11 of the housing 10 through the communication path 12 in some cases. Moreover, the electrolytic solution coming out into the opening portion 11 of the housing 10 comes outside of the pressure regulating valve 1 over the lid 30 in some cases. As described above, in the power storage device 3, the plurality of power storage modules 2 are stacked in the up-and-down direction with the plurality of pressure regulating valves 1 arranged one above the other in the up-and-down direction. Thus, there is a possibility that the electrolytic solution coming outside of the pressure regulating valve 1 causes short circuit in the power storage module 2 adjacent to the power storage module 2 attached with that pressure regulating valve 1. For example, there is a possibility that in a case where the electrolytic solution coming outside of the pressure regulating valve 1 falls and the electrolytic solution adheres to the pressure regulating valve 1 located below, the fallen electrolytic solution is electrically connected to the electrolytic solution in the power storage module 2 attached with the pressure regulating valve 1 located below, causing short circuit between the two power storage modules 2. There is also a possibility that the electrolytic solution adheres to the pressure regulating valves 1 located below, causing short circuit between the power storage modules 2 attached with the pressure regulating valves 1 to which the electrolytic solution adheres.

As described above, the pressure regulating valve 1 is provided with the short-circuit preventing structure so as to prevent short circuit between the power storage modules 2 based on the electrolytic solution coming outside of the power storage module 2. Specifically, the pressure regulating valve 1 has, as the short-circuit preventing structure, the drain outlet 15 formed in the lower wall portion 14 of the housing 10 and the stepped portion 16 formed on the upper wall portion 13 of the housing 10. The drain outlet 15 is provided near the one end 14b of the lower wall portion 14 or on the end 14b as illustrated in Figs. 4, 6, and 7. The drain outlet 15 may be a hole penetrating the lower wall portion 14 or may be a recessed portion that is a portion of the lower wall portion 14 recessed rearward from an edge on the front side (a front edge 14d) of the lower wall portion 14. Moreover, the drain outlet 15 in the form of the recessed portion may extend rearward to the front surface 19a of the solid portion 19 or may extend rearward to a position not to reach the front surface 19a of the solid portion 19. Moreover, a plurality of drain outlets 15 may be provided. Moreover, the drain outlet 15 may likewise be formed near the other end 14c or on the end 14c of the lower wall portion 14. Moreover, the drain outlet 15 is not necessarily formed on the side of the end 14b or the side of the end 14c of the lower wall portion 14 and may be formed likewise on both the side of the end 14b and the side of the end 14c.

The stepped portion 16 is a portion formed by an upwardly protruding portion of the upper surface 13a of the upper wall portion 13 as illustrated in Figs. 4 to 6. The stepped portion 16 is not provided at a position opposed in the up-and-down direction to the drain outlet 15 but at a position offset toward the end 13c with respect to the position in the upper wall portion 13 opposed in the up-and-down direction to the drain outlet 15. The stepped portion 16 is formed throughout a width of the upper surface 13a in the front-and-rear direction, while extending in the extending direction of the upper wall portion 13 to a position not to reach the end 13c. It should be noted that the stepped portion 16 does not have to be formed throughout the width of the upper surface 13a in the front-and-rear direction. For example, the stepped portion 16 may extend from an edge on the front side (a front edge 13d) of the upper wall portion 13 to a position not to reach an edge on the rear side (a rear edge 13e) of the upper wall portion 13. Moreover, the stepped portion 16 may extend from a position behind the front edge 13d to the rear edge 13e or may extend from the position behind the front edge 13d to a position not to reach the rear edge 13e. In a case where the stepped portion 16 is not formed throughout the width of the upper surface 13a in the front-and-rear direction, it is preferable that a groove-shaped path be provided in the upper wall portion 13 between the stepped portion 16 and the front edge 13d and that a groove-shaped path be formed in the upper wall portion 13 between the stepped portion 16 and the rear edge 13e. It is preferable that a step, a slope, a combination of a step and a slope, or the like be provided in the groove-shaped paths so as to prevent, in a case where the electrolytic solution enters the groove-shaped paths, a backward flow of the electrolytic solution directed to the inner side. Specifically, for example, a step, a slope, a combination of a step and a slope, or the like is provided in the groove-shaped paths so as to cause bottom surfaces of the paths to be declined downward toward the end 13b or the end 13c or toward the end 13b and the end 13c.

In a case where the drain outlet 15 is provided on the side of the end 14c of the lower wall portion 14, the stepped portion is likewise provided at a position offset toward the end 13b with respect to a position in the upper wall portion 13 opposed in the up-and-down direction to the drain outlet 15, accordingly. Moreover, in a case where the respective drain outlets 15 are provided on both the side of the end 14b and the side of the end 14c of the lower wall portion 14, the respective stepped portions 16 are likewise provided at a position offset toward the end 13c with respect to a position in the upper wall portion 13 opposed in the up-and-down direction to the drain outlet 15 on the side of the end 14b and a position offset toward the drain outlet 15 with respect to a position in the upper wall portion 13 opposed in the up-and-down direction to the drain outlet 15 on the side of the end 14c, accordingly.

The electrolytic solution in the internal space V of the power storage module 2 coming out through the communication path 12 can be collected in the drain outlet 15 and drained out of the pressure regulating valve 1 through the drain outlet 15. Since the electrolytic solution drained through the drain outlet 15 falls onto an end on the side of the side wall portion 17 or 18 of the pressure regulating valve 1 located below that pressure regulating valve 1, it is possible to prevent the electrolytic solution from adhering to a wide range of the pressure regulating valve 1 located below by virtue of the drain outlet 15. It is thus possible to reduce the occurrence of short circuit between the power storage modules 2 caused by the electrolytic solution coming out of the pressure regulating valve 1.

Moreover, the stepped portion 16 of the pressure regulating valve 1 is not provided at a position opposed in the up-and-down direction to the drain outlet 15 but on the inner side in the extending direction of the upper wall portion 13 with respect to the position opposed in the up-and-down direction to the drain outlet 15. The plurality of power storage modules 2 of the power storage device 3 are stacked to be directly opposed or substantially directly opposed in the up-and-down direction. That is to say, in the power storage device 3, respective positions of the drain outlets 15 of the plurality of power storage modules 2 in a horizontal direction are the same or substantially the same as one another and respective positions of the stepped portions 16 of the plurality of power storage modules 2 in the horizontal direction are the same or substantially the same as one another. Thus, in the power storage device 3, the stepped portion 16 of the pressure regulating valve 1 of the lower one of the power storage modules 2 adjacent to each other is not opposed in the up-and-down direction to the drain outlet 15 of the pressure regulating valve 1 of the upper one of the power storage modules 2 adjacent to each other but provided on the inner side with respect to the position opposed in the up-and-down direction to the drain outlet 15 of the upper pressure regulating valve 1. This causes the electrolytic solution drained through the drain outlet 15 of the pressure regulating valve 1 of the upper power storage module 2 to fall onto the outer side in the extending direction of the upper wall portion 13 with respect to the stepped portion 16 of the upper surface 13a of the pressure regulating valve 1 of the lower power storage module 2, and causes the electrolytic solution fallen onto the upper surface 13a to be held back by the stepped portion 16 and flow to the outer side as being prevented from flowing to the inner side. Thus, even though the electrolytic solution drained through the upper drain outlet 15 falls onto the upper surface 13a of the lower pressure regulating valve 1, the electrolytic solution flows to the outer side without flowing to the inner side. This can prevent the electrolytic solution fallen through the upper drain outlet 15 from adhering to a wide range of the pressure regulating valve 1 located below. It is thus possible to reduce the occurrence of short circuit between the power storage modules 2 caused by the electrolytic solution coming out of the pressure regulating valve 1.

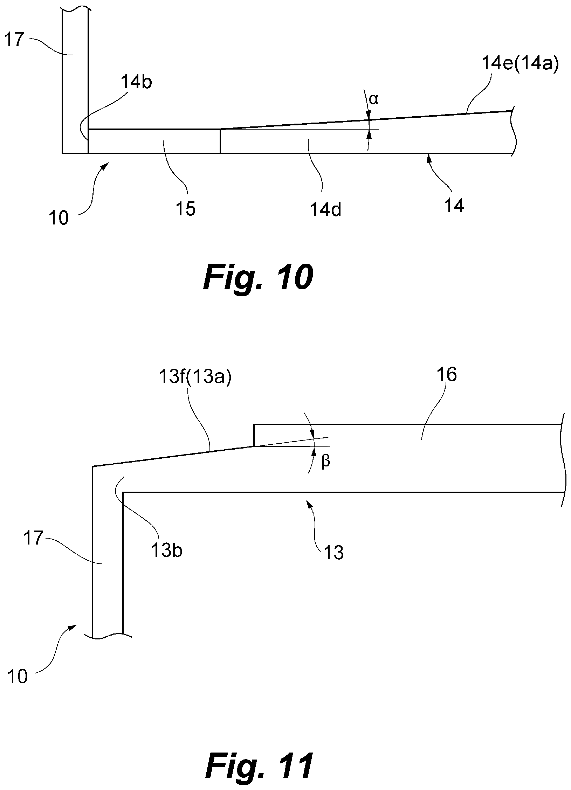

Moreover, the pressure regulating valve 1, as illustrate in Fig. 10, has, as the short-circuit preventing structure, a flow path 14e forming a flow of liquid directed to the drain outlet 15 in an inner surface 14a which is a surface facing the upper side of the lower wall portion 14. The flow path 14e is formed by, for example, inclining a part or the whole of the inner surface 14a at an angle α with respect to a horizontal plane so that the drain outlet 15 side is located lower. In a case where the drain outlet 15 is formed on the side of the end 14c, the flow path 14e is likewise formed by inclining a part or the whole of the inner surface 14a with respect to the horizontal plane so that the drain outlet 15 side is located lower. In a case where the drain outlets 15 are formed on both the side of the end 14b and the side of the end 14c, respectively, for example, a part on the end 14b side of the inner surface 14a is formed in such a manner that the part inclines with respect to the horizontal plane so that the side of the end 14b becomes lower and a part on the side of the end 14c of the inner surface 14a is formed in such a manner that the part inclines with respect to the horizontal plane so that the end 14c becomes lower. Moreover, the flow path 14e may be a downwardly recessed groove formed in the inner surface 14a. In this case, a bottom surface of the flow path 14e is also inclined as the above-described inner surface 14a. The flow path 14e makes it possible to collect, at the drain outlet 15, the electrolytic solution coming out of the coupling portion 12 to allow the drain outlet 15 to more effectively work. It should be noted that the pressure regulating valve 1 may have no flow path 14e.

The pressure regulating valve 1, as illustrated in Fig. 11, may also have, as the short-circuit preventing structure, a flow path 13f forming a flow of liquid directed to the side wall portion 17 on the outer side at a portion of the upper surface 13a of the upper wall portion 13 close to the stepped portion 16 on the outer side (the end 13b side). The flow path 13f is formed by, for example, inclining a part or the whole of a portion of the upper surface 13a on the outer side with respect to the stepped portion 16 at an angle β with respect to the horizontal plane so that the end 13b becomes lower. In a case where the stepped portion 16 is formed on the side of the end 13c, the flow path 13f is likewise formed by inclining a part or the whole of a portion of the upper surface 13a close, on the outer side (the side of the end 13c), to the stepped portion 16 with respect to the horizontal plane so that the end 13c becomes lower. In a case where the stepped portions 16 are formed on both the side of the end 13b and the side of the end 13c, respectively, , for example, a part or the whole of a portion of the upper surface 13a close to the stepped portion 16 on the outer side (the end 13b side) is formed to incline with respect to the horizontal plane so that the end 13b becomes lower and a part or the whole of a portion of the upper surface 13a close to the stepped portion 16 on the outer side (the side of the end 13c) is formed to incline with respect to the horizontal plane so that the end 13c becomes lower. Moreover, the flow path 13f may be a groove formed in the upper surface 13a. In this case, a bottom surface of the flow path 13f is also inclined as the above-described upper surface 13a. The flow path 13f makes it possible to cause the electrolytic solution fallen through the drain outlet 15 of the upper pressure regulating valve 1 to flow to the outer side with respect to the stepped portion 16 to allow the drain outlet 15 and the stepped portion 16 to more effectively work.

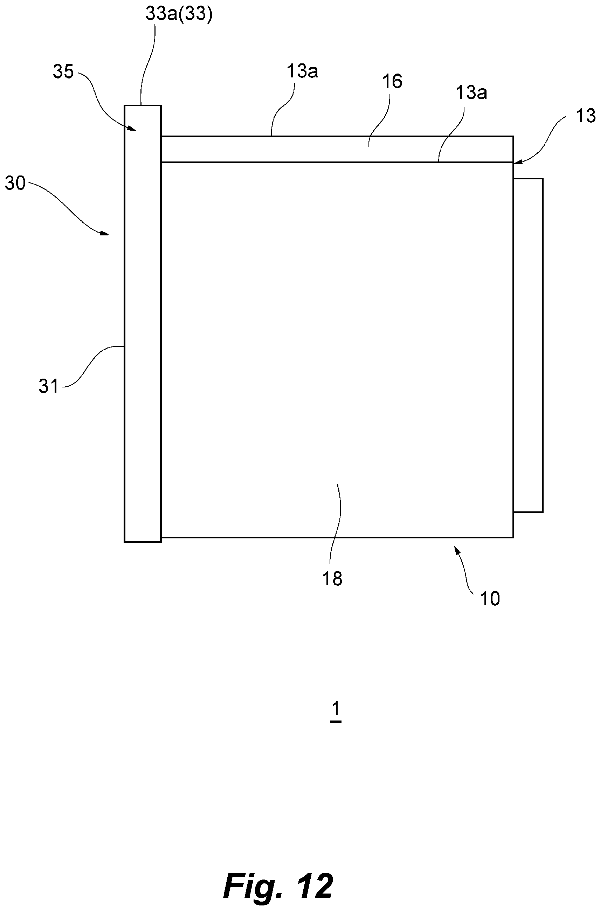

The lid unit 30 of the pressure regulating valve 1 also has a structure as the short-circuit preventing structure. Specifically, in the pressure regulating valve 1, the lid 30 projects on the upper side with respect to the upper wall portion 13 of the housing 10. For example, the upper surface portion 33a of the peripheral surface 33 of the lid 30 is located, throughout the entirety thereof, on the upper side with respect to the upper surface 13a of the upper wall portion 13 of the housing 10 as illustrated in Fig. 12. An upper portion 35, including the upper surface portion 33a, of the lid 30 thus projects on the upper side with respect to the upper surface 13a of the upper wall portion 13 of the upper surface 13a of the housing 10. This can prevent the electrolytic solution fallen through the drain outlet 15 of the upper pressure regulating valve 1 onto the upper surface 13a of the lower pressure regulating valve 1 from flowing to the side of the front surface 31 of the lid 30. This can prevent the electrolytic solution fallen through the drain outlet 15 above from adhering to a wide range of the pressure regulating valve 1 located below. This makes it possible to reduce the occurrence of short circuit between the power storage modules 2 caused by the electrolytic solution coming out of the pressure regulating valve 1. It should be noted that a part of the upper surface portion 33a of the lid 30 may be located on the upper side with respect to the upper surface 13a of the upper wall portion 13 of the housing 10. For example, a portion of the lid 30 being in contact with the stepped portion 16 and a portion on the outer side (in the illustrated example, a portion near the end 13b) with respect to the stepped portion 16 of the upper wall portion 13 may be located on the upper side with respect to the upper surface 13a of the upper wall portion 13. Moreover, the lid 30 does not have to project on the upper side with respect to the upper wall portion 13 of the housing 10.

Next, description will be made on workings of the pressure regulating valve 1 having the above-described configuration when the power storage device 3 is in an in-use state.

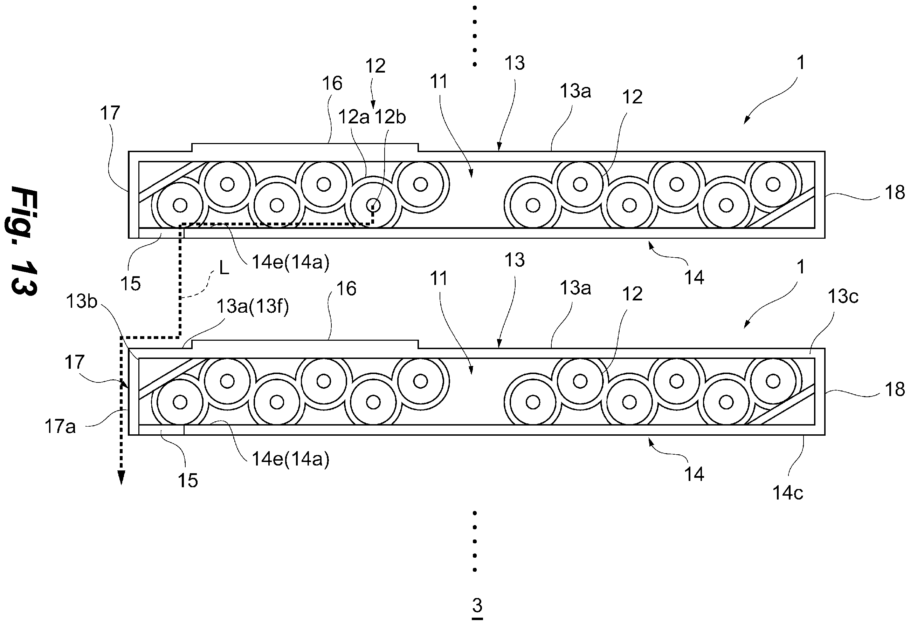

In the power storage device 3, the power storage modules 2 are stacked in the up-and-down direction as illustrated in Fig. 3 and the respective pressure regulating valves 1 attached to the power storage modules 2 are arranged one above the other in the up-and-down direction as illustrated, by way of example, in Fig. 13. It should be noted that in Fig. 13, the respective pressure regulating valves 1 of two of the power storage modules 2 adjacent in the up-and-down direction in the power storage device 3 are illustrated with the valve bodies 20 and the lids 30 being transparent. In the in-use state, the power storage device 3 is in an attitude where the up-and-down direction thereof is along a vertical-line direction. For example, the power storage device 3 is attached to an object to attach the power storage device 3, such as a vehicle, and the power storage module 3 is attached with the up-and-down direction thereof being along the up-and-down direction of the object to attach.

As described above, in response to the pressure of the internal space V of the power storage module 2 exceeding the predetermined pressure, the valve body 20 in the communication path 12 corresponding to the internal space V with the pressure exceeding the predetermined pressure causes the communication path 12 to be open and the pressure regulating valve 1 causes the internal space V with the pressure exceeding the predetermined pressure to be open in the opening portion 11 through the communication path 12. At this time, the electrolytic solution in the internal space V comes out into the opening portion 11 through the communication path 12 as the internal space V is caused to be open in the opening portion 11 as illustrated in Fig. 13 in some cases. The pressure regulating valve 1, which has the above-described short-circuit preventing structure, forms a flow of the electrolytic solution coming out into the opening portion 11 as drawn in a broken arrowed line L in Fig. 13 to reduce the occurrence of short circuit between the power storage modules 2 caused by an electrolytic solution L coming out of the pressure regulating valve 1.

Specifically, the electrolytic solution L coming out into the opening portion 11 through the through hole 12b and the valve body housing portion 12a of the communication path 12, which is caused to be open by the movement of the valve body 20, falls onto the inner surface 14a of the lower wall portion 14 of the housing 10 as illustrated in Fig. 13. The inner surface 14a of the lower wall portion 14 is formed with the flow path 14e, which is inclined so that the drain outlet 15 side becomes lower. The electrolytic solution L fallen onto the inner surface 14a of the lower wall portion 14 is thus guided to the drain outlet 15 through the flow path 14e to flow toward the drain outlet 15. The electrolytic solution L reaching the drain outlet 15 is then drained through the drain outlet 15 to fall down onto the pressure regulating valve 1 of the power storage module 2 adj acent below. It should be noted that although the electrolytic solution L is drained through the drain outlet 15 even in a case where no flow path 14e is formed in the inner surface 14a of the lower wall portion 14, the formation of the flow path 14e makes it possible to more reliably drain the electrolytic solution L through the drain outlet 15.

Out of the pressure regulating valves 1 adjacent to each other, the drain outlet 15 of the upper pressure regulating valve 1 and the stepped portion 16 of the lower pressure regulating valve 1 are not opposed in the up-and-down direction to each other and the portion of the upper surface 13a of the lower pressure regulating valve 1 opposed in the up-and-down direction to the drain outlet 15 of the upper pressure regulating valve 1 is located on the outer side (the side of the side wall portion 17) with respect to the stepped portion 16. This causes the electrolytic solution L drained through the drain outlet 15 and fallen down to fall onto the portion of the upper surface 13a of the upper wall portion 13 located on the outer side (the side of the side wall portion 17) with respect to the stepped portion 16 of the lower pressure regulating valve 1. In a case where the electrolytic solution L fallen onto the upper surface 13a is directed to the inner side (the side of the side wall portion 18) on the upper surface 13a, the electrolytic solution L comes into contact with the stepped portion 16 and the flow of the electrolytic solution L directed to the inner side is held back by the stepped portion 16. The flow of the electrolytic solution L fallen onto the upper surface 13a is controlled in this manner to inhibit the electrolytic solution L fallen onto the upper surface 13a from being directed to the inner side (the side of the side wall portion 18) on the upper surface 13a.

Moreover, as being held back by the stepped portion 16, the electrolytic solution L fallen onto the upper surface 13a through the drain outlet 15 of the upper pressure regulating valve 1 flows toward the outer side (the side of the side wall portion 17) and falls down from the pressure regulating valve 1 along the outer surface 17a of the side wall portion 17. In a case where the flow path 13f is formed in the upper surface 13a of the upper wall portion 13 located on the outer side (the side of the side wall portion 17) with respect to the stepped portion 16, the electrolytic solution L fallen onto the upper surface 13a through the drain outlet 15 of the upper pressure regulating valve 1 is guided to be directed to the outer side (the side of the side wall portion 17) through the flow path 13f. This makes it possible to more reliably cause the electrolytic solution L fallen onto the upper surface 13a to fall down along the outer surface 17a of the side wall portion 17.

The electrolytic solution L fallen down along the outer surface 17a of the side wall portion 17 falls onto the outer surface 17a of the side wall portion 17 of the pressure regulating valve 1 of the power storage module 2 located below, so that the adhesion of the electrolytic solution L to the inner side of the pressure regulating valve 1 is reduced. Moreover, even in a case where the electrolytic solution L fallen down along the outer surface 17a of the side wall portion 17 falls onto the upper surface 13a of the upper wall portion 13 of the pressure regulating valve 1 of the power storage module 2 located below, the stepped portion 16 of the upper wall portion 13 works as described above, making it possible to cause the electrolytic solution L to fall down along the outer surface 17a of the side wall portion 17.

The drain outlet 15 and the stepped portion 16 of the pressure regulating valve 1 thus make it possible to cause the electrolytic solution L coming out of the pressure regulating valve 1 to fall down along the outer surface 17a of the side wall portion 17 on the outer side, enabling a reduction in the adhesion of the electrolytic solution L coming out of the pressure regulating valve 1 to an inner portion of the pressure regulating valve 1 located below. This makes it possible to reduce the occurrence of short circuit between the power storage modules 2 thorough the electrolytic solution L coming out of the pressure regulating valve 1 or the electrolytic solution L adhering to the pressure regulating valve 1 located below. It should be noted that in a case where the drain outlet 15 is provided on the side of the end 14c and the stepped portion 16 is provided on the side of the end 13c, the pressure regulating valve 1 also works as described above. Moreover, in a case where the respective drain outlets 15 are provided on the side of the end 14b and the side of the end 14c and the respective stepped portions 16 are provided on the side of the end 13b and the side of the end 13c, the pressure regulating valve 1 also works as described above.

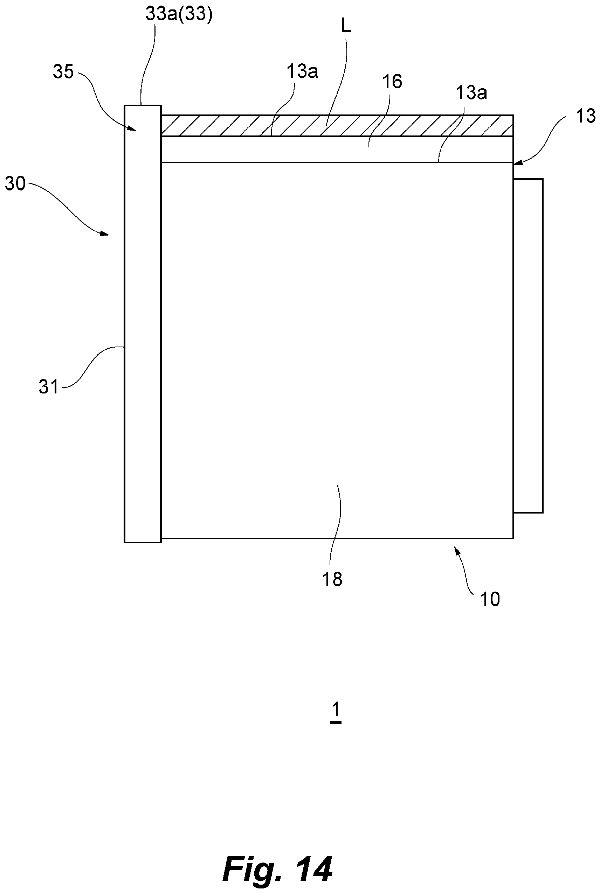

Fig. 14 is a view of the pressure regulating valve 1 attached to the lower power storage module 2 illustrated in Fig. 13 as viewed from the lateral side. As illustrated in Fig. 14, the upper surface portion 33a of the lid 30 of the pressure regulating valve 1 projects on the upper side with respect to the upper surface 13a of the upper wall portion 13 of the housing 10. This causes the electrolytic solution L fallen onto the upper surface 13a of the upper wall portion 13 of the lower pressure regulating valve 1 through the drain outlet 15 of the upper pressure regulating valve 1 is directed to the front side, the electrolytic solution L comes into contact with the upper portion 35 of the lid 30 and the flow of the electrolytic solution L on the upper surface 13a directed to the front side is held back by the upper portion 35 of the lid 30. The lid 30 thus also serves to control the flow of the electrolytic solution L fallen onto the upper surface 13a to inhibit the electrolytic solution L fallen onto the upper surface 13a from being directed to the front side. This makes it possible to reduce the flow of the electrolytic solution L fallen onto the upper surface 13a to the side of the front surface 31 over the lid 30 and reduce the adhesion of the electrolytic solution L fallen onto the upper surface 13a to the front surface 31 of the lid 30. It is thus possible to reduce the falling of the electrolytic solution L onto the front surface 31 of the pressure regulating valve 1 located further below. This makes it possible to reduce the occurrence of short circuit between the power storage modules 2 thorough the electrolytic solution L coming out of the pressure regulating valve 1 or the electrolytic solution L adhering to the pressure regulating valve 1 located below.

Moreover, the upper surface portion 33a of the lid 30 of the pressure regulating valve 1 projects on the upper side with respect to the stepped portion 16 of the upper wall portion 13 of the housing 10 as described in Fig. 14. Thus, even though the electrolytic solution L fallen through the drain outlet 15 of the upper pressure regulating valve 1 adheres onto the stepped portion 16 of the lower pressure regulating valve 1, a flow of the electrolytic solution L on the stepped portion 16 directed to the front side is likewise held back by the upper portion 35 of the lid 30. Therefore, the flow of the electrolytic solution L fallen onto the stepped portion 16 is also controllable by virtue of the lid 30, which makes it possible to inhibit the electrolytic solution L fallen onto the stepped portion 16 from being directed to the side of the front surface 31 over the lid 30.

As seen from the above, the pressure regulating valve 1 according to the embodiment of the present invention makes it possible to reduce the occurrence of short circuit between the power storage modules 2 caused by the electrolytic solution L coming out of the pressure regulating valve 1.

In the foregoing, the embodiment of the present invention is described but the present invention is not limited to the above-described pressure regulating valve 1 according to the embodiment of the present invention and may include any aspect within the concept of the present invention and the scope of the claims. Moreover, in order to achieve at least a part of the above-described problems and effects, the components may be selectively combined as appropriate. For example, the shapes, materials, locations, sizes, and the like of the components in the above-described embodiment are changeable as appropriate in accordance with a specific aspect in use of the present invention.

### Reference Sign(s) List

1...pressure regulating valve, 2...power storage module, 3...power storage device, 4... conductive plate, 10...housing, 11...opening portion, 11a...opening, 12...communication path, 12a...valve body housing portion, 12b...through hole, 13...upper wall portion, 13a...upper surface, 13b, 13c...end, 13d...front edge, 13e...rear edge, 13f...flow path, 14...lower wall portion, 14a...inner surface, 14b, 14c...end, 14d...front edge, 14e...flow path, 15...drain outlet, 16...stepped portion, 17, 18...side wall portion, 17a...outer surface, 19...solid portion, 19a...front surface, 19b...rear surface, 19c...projecting portion, 20...valve body, 30...lid, 31...front surface, 32...rear surface, 32a...stepped portion, 33...peripheral surface, 33a...upper surface portion, 33b...lower surface portion, 33c, 33d...side surface portion, 34...projecting portion, 35...upper portion, 101...bipolar electrode, 102...current collector, 103...positive electrode, 104...negative electrode, 105...separator, 106...seal member, 107...frame, L...electrolytic solution (flow of electrolytic solution), V...internal space, α, β...angle

## Claims

1. A pressure regulating valve, in a power storage device which includes a plurality of power storage modules and in which the power storage modules are stacked, in each of the power storage modules, a plurality of bipolar electrodes are stacked between an electrode with a positive polarity and an electrode with a negative polarity, each of the bipolar electrodes includes a current collector, a positive electrode provided on one surface of the current collector, and a negative electrode provided on an opposite surface of the current collector, an internal space defined by a seal member is formed between each pair of the electrodes opposed to one another, an electrolytic solution is sealed in each of the internal spaces, and a separator intervenes between each pair of the electrodes opposed to one another, the pressure regulating valve allowing the internal spaces of each of the power storage modules to be open, the pressure regulating valve comprising
a short-circuit preventing structure for preventing short circuit between the power storage modules caused by the electrolytic solution coming outside of the power storage modules.

2. The pressure regulating valve according to claim 1, wherein the short-circuit preventing structure is configured to prevent the electrolytic solution coming outside of one of the power storage modules from causing the short circuit of another one of the power storage modules located below the power storage module from which the electrolytic solution comes out.

3. The pressure regulating valve according to claim 1 or 2, comprising:
a housing to be attached to the power storage module, the housing including an opening portion and communication paths through which the respective internal spaces are caused to be in communication with the opening portion;
a valve body blocking each of the communication paths while allowing the communication path to be open; and
a lid to be attached to the opening portion of the housing, wherein
the housing includes an upper wall portion and a lower wall portion that are portions opposed to each other in a stacking direction of the power storage modules to form the opening portion,
a drain outlet is formed in the lower wall portion, the drain outlet being a portion penetrating the lower wall portion,
an upper surface of the upper wall portion is provided with a stepped portion, the upper surface being a surface facing an upper side, the stepped portion projecting on the upper side to form a step, and
the stepped portion is located at a position not opposed in the up-and-down direction to the drain outlet.

4. The pressure regulating valve according to claim 3, wherein the drain outlet is provided in at least one of end portions in an extending direction of the lower wall portion.

5. The pressure regulating valve according to claim 3 or 4, wherein
the lower wall portion has an inner surface, the inner surface being a surface facing the upper side, and
a flow path is formed in the inner surface, the flow path forming a flow of liquid directed to the drain outlet.

6. The pressure regulating valve according to any one of claims 3 to 5, wherein the lid projects on the upper side with respect to the upper wall portion.
